# EUROPEAN PATENT APPLICATION

(11) **EP 4 550 879 A1**
(43) Date of publication of application: **07.05.2025**
(21) Application number: 23831038.7
(22) Date of filing: 09.06.2023
(51) Int. Cl.: H04W 28/06, H04L 69/24, H04W 72/02, H04W 84/12

(54) **COMMUNICATION DEVICE, COMMUNICATION METHOD, AND PROGRAM**

(30) Priority: 01.07.2022 JP 2022107398
(71) Applicant: CANON KABUSHIKI KAISHA, Tokyo 146-8501 (JP)
(72) Inventor: YOSHIKAWA, Yuki, Tokyo 146-8501 (JP); OTANI, Tomoya, Tokyo 146-8501 (JP)
(74) Representative: Canon Europe Limited
(86) International application number: PCT/JP2023/021546
(87) International publication number: WO 2024/004589

(57) **Abstract**

A communication device enables transmission of a radio frame in which 0 is specified in a PHY Version Identifier Field of a U-SIG in a preamble, and a radio frame in which 1 is specified in the PHY Version Identifier Field. When the communication device transmits a radio frame in which 1 is stored in the PHY Version Identifier Field and a value greater than 6 is stored in the Bandwidth Field, the transmission means transmits the radio frame using a bandwidth greater than 320 Mhz.

## Description

### Technical Field

The present invention relates to a communication control technique in a wireless LAN.

### Background Art

The IEEE (Institute of Electrical and Electronics Engineers) 802.11 standards are known as communication standards for wireless LANs (Wireless Local Area Networks). In the IEEE 802.11be standard under development among the IEEE 802.11 standard series, one of measures that have been examined to improve the throughput as compared with the IEEE 802.11ax standard is to set the maximum value of the frequency bandwidth to 320 MHz. Conventionally, four frequency bands have been used for wireless LANs: 20 MHz, 40 MHz, 80 MHz, and 160 MHz.

### Citation List

### Patent Literature

PTL 1: Japanese Patent Laid-Open No. 2018-050133

### Summary of Invention

### Technical Problem

As a large number of standards have been established so far, it is expected that new standards will emerge in the future. In the new standards, it is considered to use a bandwidth exceeding 320 MHz under consideration in the 802.11be standard to improve communication throughput.

However, in the existing standards for wireless LANs, no mechanism is defined to notify that communication is performed in a frequency bandwidth greater than 320 MHz. In addition, communication devices may support both old and new standards. In this case, no mechanism is defined to efficiently notify information on the generation of a radio frame being transmitted between communication devices and information on a frequency bandwidth supported by the radio frame, using a preamble.

The present invention has been made in view of at least one of the problems described above. One aspect of the present invention provides a mechanism in which when supporting both an old generation and a new standard, a communication device can communicate information on a bandwidth corresponding to a standard of a radio frame using a Universal Signal Field (U-SIG).

### Solution to Problem

A communication device according to one aspect of the present invention is a communication device including transmission means for transmitting a radio frame including a preamble for physical layers (PHY) and compliant with an IEEE 802.11 standard series. The preamble includes at least a Legacy Signal Field (L-SIG) and a Universal Signal Field (U-SIG) communicated after the L-SIG in the radio frame. The U-SIG includes a PHY Version Identifier Field relating to a PHY version with which the radio frame is compliant, and a Bandwidth Field. The transmission means enables transmission of a radio frame in which 0 is specified in the PHY Version Identifier Field, and a radio frame in which a specific value greater than 0 is specified in the PHY Version Identifier Field. When transmitting a radio frame in which the specific value is stored in the PHY Version Identifier Field and a value greater than 6 is stored in the Bandwidth Field, the transmission means transmits the radio frame using a bandwidth greater than 320 Mhz.

### Advantageous Effects of Invention

According to the present invention, when supporting both an old generation and a new standard, a communication device can communicate information on a bandwidth corresponding to a standard using a Universal Signal Field (U-SIG) of a radio frame.

### Brief Description of Drawings

[Fig. 1] Fig. 1 is a diagram illustrating an example configuration of a network.
[Fig. 2] Fig. 2 is a diagram illustrating an example functional configuration of a communication device.
[Fig. 3] Fig. 3 is a diagram illustrating an example hardware configuration of the communication device.
[Fig. 4] Fig. 4 is a diagram illustrating an example of a process flow executed in the communication device.
[Fig. 5A] Fig. 5A is a diagram illustrating an example of a PHY frame structure of an EHT (GEN7) PPDU.
[Fig. 5B] Fig. 5B is a diagram illustrating an example of a PHY frame structure of an HR (GEN8) PPDU.
[Fig. 6A] Fig. 6A is a modification of PHY Version Identifier.
[Fig. 6B] Fig. 6B is a modification of PHY Version Identifier.

### Description of Embodiments

The accompanying drawings, which are incorporated in and constitute a part of this specification, illustrate an embodiment of the present invention, and, together with the description thereof, serve to explain the principles of the present invention.

An embodiment will be described in detail hereinafter with reference to the accompanying drawings. The following embodiment does not limit the claimed invention. While multiple features are described in the embodiment, not all of the multiple features are required for the invention, and the multiple features may be combined as appropriate. Further, in the accompanying drawings, the same or similar components are denoted by the same reference numerals, and redundant description thereof will be omitted.

### (Network Configuration)

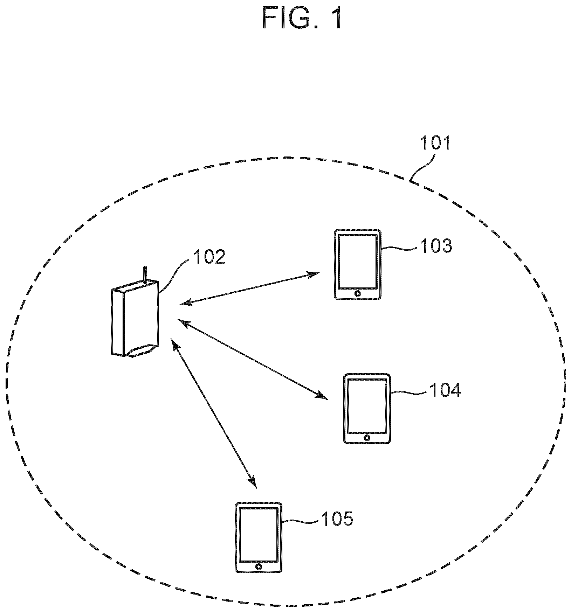

Fig. 1 illustrates an example configuration of a wireless communication network according to the present embodiment. The wireless communication network includes one access point (AP) and three stations (STAs). An AP 102 and a STA 103 are compliant with IEEE 802.11 EHT (Extremely High Throughput), and are configured to enable execution of wireless communication compliant with a standard established before the IEEE 802.11 EHT standard. The IEEE 802.11 EHT standard is also referred to as the IEEE 802.11be standard. In the present embodiment, the IEEE 802.11ax established before 802.11be is referred to as the sixth-generation standard or IEEE 802.11 GEN6, analogous to Wi-Fi 6, which is an interoperability certification program for this standard. It is also referred to simply as GEN6. The IEEE 802.11be standard is also referred to as the seventh-generation standard, IEEE 802.11 GEN7, or simply GEN7, analogous to Wi-Fi 7 (tentatively termed), which is a certification program for this standard.

The AP 102 and the STA 103 are configured to enable execution of wireless communication compliant with a successor standard to the IEEE 802.11be standard aiming at a maximum transmission rate of 46.08 Gbps, the successor standard aiming at a maximum transmission rate of 90 Gbps to more than 100 Gbps. The successor standard to 802.11be is also referred to as the eighth-generation standard, IEEE 802.11 GEN8, or simply GEN8, analogous to Wi-Fi 8 (tentatively termed), which is a certification program for this standard. In addition, the successor standard to 802.11be sets new goals to be achieved, such as support for high-reliability communication and low-latency communication. In view of the above, in the present embodiment, a successor standard to IEEE 802.11be, the successor standard aiming at a maximum transmission rate of 90 Gbps to more than 100 Gbps, is also referred to as IEEE 802.11 HR (High Reliability).

IEEE 802.11 HR is termed for convenience in light of the aim to be achieved in the successor standard and the features that will be prominent in the standard, and may be termed differently when the standard is established. However, it should be noted that this specification and the appended claims are essentially applicable to any standard that is a successor to the 802.11be standard and that can support wireless communication using bandwidths greater than 320 Mhz.

A STA 104 is a STA that supports the IEEE 802.11 EHT (GEN7) standard but does not support IEEE 802.11 HR (GEN8). A STA 105 is a STA compliant with a communication standard after IEEE 802.11 HR (GEN8). The communication standard after IEEE 802.11 HR (GEN8) is referred to as IEEE 802.11 GEN9 for convenience.

In the following, an access point may be referred to as an "AP", and a station (terminal) may be referred to as an "STA" without a reference number when, for example, a specific device is not indicated. In Fig. 1, a wireless communication network including one AP and three STAs is illustrated as an example. However, the numbers of communication devices may be larger or smaller than that illustrated in Fig. 1. In one example, no AP may be present when communication is established between STAs. In Fig. 1, the communication range of the network formed by the AP 102 is indicated by a circle 101. The communication range may cover a wider range or may cover only a narrower range.

### (Configuration of Device)

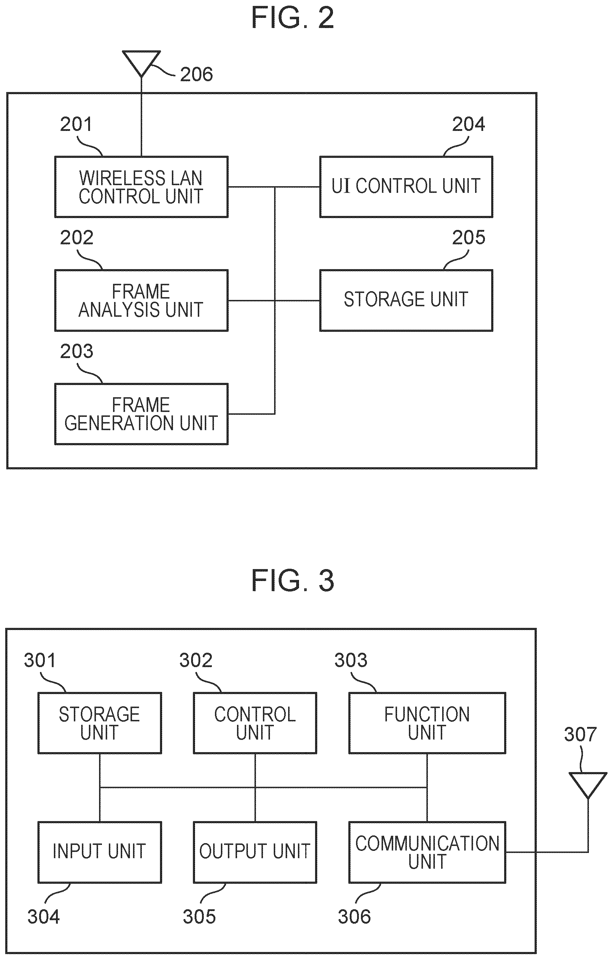

Fig. 2 illustrates an example hardware configuration of a communication device (AP and STA). The communication device includes, as an example hardware configuration thereof, a storage unit 201, a control unit 202, a function unit 203, an input unit 204, an output unit 205, a communication unit 206, and an antenna 207.

The storage unit 201 includes both of a ROM and a RAM or either of them, and stores programs for performing various operations described below and various kinds of information such as communication parameters for wireless communication. As the storage unit 201, in addition to a memory such as a ROM or a RAM, a storage medium such as a non-volatile storage device such as a hard disk or an SSD (Solid State Drive) may be used.

The control unit 202 includes, for example, a processor such as a CPU or an MPU, an ASIC (application specific integrated circuit), a DSP (digital signal processor), an FPGA (field programmable gate array), or the like. CPU is an acronym for Central Processing Unit, and MPU is an acronym for Micro Processing Unit, The control unit 202 executes a program stored in the storage unit 201 and operates a hardware circuit such as an ASIC to control the entire device. The control unit 202 may control the entire device by cooperation of the programs stored in the storage unit 201 and an OS (Operating System).

Further, the control unit 202 controls the function unit 203 to execute predetermined processing such as imaging, printing, and projection. The function unit 203 is hardware for the device to execute predetermined processing. For example, when the device is a camera, the function unit 203 is an imaging unit and performs imaging processing. For example, when the device is a printer, the function unit 203 is a printing unit and performs print processing. For example, when the device is a projector, the function unit 203 is a projection unit and performs projection processing. Data processed by the function unit 203 may be data stored in the storage unit 201 or data communicated with another AP or STA via the communication unit 206 described below.

The input unit 204 receives various operations from a user. The output unit 205 performs various outputs to the user. Here, the output by the output unit 205 includes, for example, at least one of display on a screen, audio output by a speaker, vibration output, and the like. Both the input unit 204 and the output unit 205 may be implemented by one module such as a touch panel.

The communication unit 206 performs control of wireless communication compliant with the IEEE 802.11 standard series or control of IP communication. In the present embodiment, the communication unit 206 can execute communication processing compliant with at least the IEEE 802.11be (GEN7) standard. As described above, whether to enable support for communication processing compliant with the IEEE 802.11 HR (GEN8) or IEEE 802.11 GEN9 standard is different for each communication device.

Further, the communication unit 206 controls the antenna 207 to transmit and receive a radio signal for wireless communication. The device communicates content such as image data, document data, and video data to or from another communication device via the communication unit 206. The antenna 207 is an antenna capable of, for example, transmission and reception of at least one of the sub-GHz band, the 2.4 GHz band, the 5 GHz band, the 6 GHz band, and the 7 GHz band. Note that there is no limitation on the frequency bands (and combinations thereof) that the antenna 207 can support. The antenna 207 may be a single antenna or a set of two or more antennas for performing MIMO (Multi-Input and Multi-Output) transmission and reception. In Fig. 2, one antenna 207 is illustrated. However, for example, two or more (two or more sets of) antennas that can support different frequency bands may be used.

Fig. 3 illustrates an example functional configuration of the communication device (AP and STA). The communication device includes, as an example, a wireless LAN control unit 301, a frame analysis unit 302, a frame generation unit 303, a UI control unit 304, a storage unit 305, and an antenna 306.

The wireless LAN control unit 301 includes a circuit for transmitting and receiving a radio signal to and from another wireless LAN device (e.g., another AP or STA) using the antenna 306, and a program for controlling the circuit. The wireless LAN control unit 301 performs communication control of a wireless LAN, such as transmission of a frame generated by the frame generation unit 303 and reception of a radio frame from another wireless LAN device, in accordance with the IEEE 802.11 standard series. The frame analysis unit 302 analyzes a radio frame received via the wireless LAN control unit 301. This analysis is performed by reading the radio frame from the beginning. As described below, the frame analysis unit 302 may operate so as to discard a radio frame for a standard (version) with which the communication device is not compliant by analyzing the physical layer (PHY preamble) of the radio frame. As a result, the communication device can interrupt the analysis of a radio frame of a type with which the communication device is not compliant at an early stage, thereby reducing power consumption. PHY stands for physical layers.

The frame generation unit 303 generates a radio frame including data to be transmitted to another AP or STA, for example. The frame generation unit 303 generates a radio frame compliant with a standard that enables communication between the communication device and a communication partner device in accordance with a standard with which the communication device complies or, in some cases, in accordance with a standard with which the partner device complies. For example, when the communication device complies with IEEE 802.11 HR (GEN8) and the partner device complies with IEEE 802.11be (GEN7), a radio frame (EHT PPDU) compliant with IEEE 802.11be is generated. PPDU is an abbreviation for PLCP Protocol Data Unit, and PLCP is an abbreviation for Physical Layer Convergence Protocol. For example, when both the communication device and the partner device comply with IEEE 802.11 HR (GEN8), a radio frame (HR (GEN8) PPDU) compliant with IEEE 802.11 HR (GEN8) is generated. The frame generated by the frame generation unit is transmitted by the wireless LAN control unit 301.

The UI control unit 304 includes hardware relating to a user interface (UI) such as a touch panel or a button for receiving a user operation on the communication device, and a program for controlling the hardware. The UI control unit 304 also has a function for, for example, presenting information to the user, such as display of an image or the like or output of audio. The storage unit 305 includes a storage device such as a ROM (Read Only Memory) or a RAM (Random Access Memory) that stores programs to be executed by the communication device and various kinds of data.

### (Process Flow)

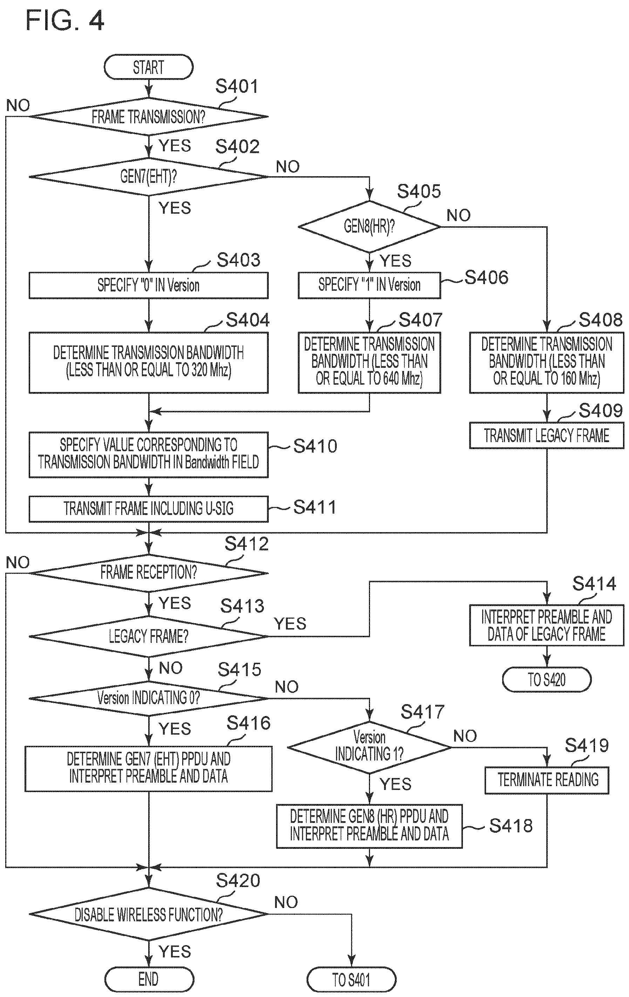

Subsequently, a process flow executed by the communication device as described above will be described. Fig. 4 illustrates an example of a process flow executed by a communication device (AP/STA) compliant with IEEE 802.11 HR (GEN8) according to the present embodiment.

First, a communication device whose communication function is enabled determines an operating frequency band. The operating frequency band is determined by the AP. That is, when the communication device is an AP, the operating frequency band is determined by, for example, a user operation on the communication device. When the communication device is a STA, it is determined to operate in the same operating frequency band as the operating frequency band determined by the AP at the connection destination or a frequency band narrower than the determined operating frequency band. The operating frequency band may be a channel in any of the 2.4 GHz, 5 GHz, 6 GHz, and 7 GHz frequency bands, for example, or may be a channel in any other available frequency band, if any.

Subsequently, a process after the determination of the frequency band will be described with reference to Fig. 4. The process illustrated in Fig. 4 represents a radio frame transmission and reception process repeatedly executed in a state in which a process of determining the frequency band is performed and information can be exchanged with another communication device.

In S (step) 401, the communication device determines whether to transmit a radio frame. If a radio frame is determined to be transmitted, the process proceeds to S402. If a radio frame is not determined to be transmitted, the process proceeds to S412.

In S402, when transmitting a radio frame, the communication device determines whether the standard with which the radio frame is to be compliant is IEEE 802.11 EHT (GEN7). The communication device determines whether the standard with which the radio frame is to be compliant is IEEE 802.11be (EHT), based on, for example, the standard with which the communication device complies and the standard with which the partner device complies. For example, when the communication device complies with IEEE 802.11 HR (GEN8), but the partner device complies with IEEE 802.11 EHT (GEN7), the communication device determines to use a radio frame compliant with the GEN7 standard for communication with the partner transmission.

If the standard with which the radio frame to be transmitted is to be compliant is determined to be IEEE 802.11 EHT (GEN7), the process proceeds to S403. If the standard with which the radio frame to be transmitted is to be compliant is not determined to be EHT (GEN7), the process proceeds to S405.

In S403, the communication device configures a field (e.g., PHY Version Identifier field described below) indicating the type of the standard in the radio frame, and sets "0" as a value indicating EHT in the field. The communication device provides the PHY Version Identifier field at the beginning of a U-SIG (Universal Signal Field) scheduled to be commonly used in the IEEE 802.11 EHT (GEN7) and the subsequent standards. Details of the U-SIG will be described below.

Subsequently, in S404, the communication device determines a transmission bandwidth, based on the reception capability of the communication partner and the transmission capability of the communication device. The maximum bandwidth that can be used in wireless communication compliant with IEEE 802.11be (EHT) is 320 Mhz. In the determination processing of S404, accordingly, the communication device determines to use a bandwidth less than or equal to 320 Mhz as the transmission bandwidth. When the determination of the transmission bandwidth is completed, the process proceeds to S410.

On the other hand, in S405, when transmitting a radio frame, the communication device determines whether the standard with which the radio frame is to be compliant is IEEE 802.HR (GEN8). The communication device determines whether the standard with which the radio frame is to be compliant is IEEE 802.11 HR (GEN8), based on, for example, the standard with which the communication device complies and the standard with which the partner device complies. For example, when both the communication device and the partner device comply with IEEE 802.11 HR (GEN8), the communication device determines to use a radio frame compliant with IEEE 802.11 HR (GEN8) for communication with the partner transmission. The communication device also determines to use IEEE 802.11 HR (GEN8) when the partner device complies with the successor standard to HR (GEN8) (e.g., GEN9 in the following generation) and the communication device complies with HR (GEN8) but does not comply with the successor standard.

If the standard with which the radio frame to be transmitted is to be compliant is determined to be IEEE 802.11 HR (GEN8), the process proceeds to S406. If the standard with which the radio frame to be transmitted is to be compliant is not determined to be HR (GEN8), the process proceeds to S408.

In S406, the communication device sets **"1"** as a value indicating HR (GEN8) in a field (e.g., PHY Version Identifier field described below) indicating the type of the standard in the radio frame.

Subsequently, in S407, the communication device determines a transmission bandwidth, based on the reception capability of the communication partner and the transmission capability of the communication device. The present embodiment assumes 640 Mhz as an example of the maximum bandwidth that can be used in wireless communication compliant with IEEE 802.11 HR (GEN8). In the determination processing of S407, accordingly, the communication device determines to use a bandwidth less than or equal to 640 Mhz as the transmission bandwidth. When the determination of the transmission bandwidth is completed, the process proceeds to S410.

If the communication partner does not comply with either of the EHT (GEN7) standard and the HR (GEN8) standard, that is, if the communication partner only complies with the old generation standard, the old generation standard is used. In this case, in S408, the communication device determines a transmission bandwidth, based on the reception capability of the communication partner and the transmission capability of the communication device. The maximum bandwidth that can be used in wireless communication compliant with standards before IEEE 802.11ax is 160 Mhz. In the determination processing of S408, accordingly, the communication device determines to use a bandwidth less than or equal to 160 Mhz as the transmission bandwidth. In S409, the communication device generates a legacy frame for a standard prior to 802.11ax and transmits the legacy frame to the partner device.

In the present embodiment, a radio frame supporting a standard established before IEEE 802.11 EHT (GEN7) in which a control signal is stored in a U-SIG described below, that is, a standard prior to IEEE 802.11ax, is referred to as a legacy frame, for convenience. Specifically, in S409, the communication device transmits an HE (High Efficiency) PPDU, a VHT (Very High Throughput) PPDU, or an HT (High Throughput) PPDU.

In the drawings, due to space limitations, a case is omitted in which both the communication device and the partner device comply with a successor standard to IEEE 802.11 HR (GEN8) (e.g., GEN9 in the following generation). When both the communication device and the partner device comply with a successor standard such as the GEN9 standard, the communication device transmits a PPDU supporting the successor standard in which version information corresponding to the successor standard is stored.

Subsequently, in S410, the communication device specifies, in the BandWidth Field of the U-SIG, a value corresponding to the transmission bandwidth determined in the above-described processing.

In S411, the communication device transmits a frame including the U-SIG. Specifically, if Yes is determined in S402, the communication device generates an EHT PPDU including a U-SIG in which 0 is specified in the Version and the value corresponding to the transmission bandwidth determined in S404 is specified in the Bandwidth Field. Subsequently, the communication device transmits the generated EHT PPDU using the transmission bandwidth specified in the U-SIG. If Yes is determined in S405, the communication device generates an HR (GEN8) PPDU including a U-SIG in which 1 is specified in the Version and the value corresponding to the transmission bandwidth determined in S407 is specified in the Bandwidth Field. Subsequently, the communication device transmits the generated HR (GEN8) PPDU using the transmission bandwidth specified in the U-SIG.

With the processing described above, the maximum value of the transmission bandwidth to be included in the U-SIG of a PPDU can be made different according to the specification in the version field of the U-SIG.

Subsequently, processing at the time of signal reception will be described. In S412, the communication device determines whether a radio frame has been received from the partner device. If a radio frame has been received from the partner device, the process proceeds to S413. If no radio frame has been received from the partner device, the process proceeds to S420. Here, the partner device refers to a partner device with which that the communication device performs wireless communication. For example, when the communication device is an AP, the partner device is a STA being connected. When the communication device is a STA, the partner device is an AP being connected to the communication device.

In S413, the communication device determines whether the received radio frame is a legacy frame. As described above, in the present embodiment, the legacy frame refers to a radio frame compliant with the IEEE 802.11a/b/g/n/ax standard. If it is determined that the received radio frame is a legacy frame, the communication device causes the process to proceed to S414. If it is determined that the received radio frame is not a legacy frame, the communication device causes the process to proceed to S415. The communication device determine that a frame is not a legacy frame when an L-SIG described below is followed by an RL-SIG, which is a repetition of the L-SIG, and the result of the remainder operation when the dividend is a Length corresponding to the frame and the divisor is 3 is not 0. On the other hand, when the RL-SIG is not included or the result of the remainder operation described above is 0, the communication device determines that the frame is a legacy frame.

In S414, the communication device reads and interprets all of the preamble and data of the radio frame. The frame analysis unit 302 of the communication device identifies the type of the preamble as appropriate, and analyzes the subsequent preamble and data according to the identified type of the preamble. The data (MSDU including a MAC frame) obtained as a result of the analysis of the frame is notified to an upper layer such as a data link layer or a network layer. The upper layer interprets the MAC frame or an IP packet as appropriate and performs necessary processing. For example, when the communication device is an AP, the upper layer performs a process of transferring data to another STA or another network (gateway) and various control processes. For example, when the communication device is a STA, data is passed to an application or the like, and various kinds of control are performed. When the various processes based on the received radio frame are completed, the communication device causes the process to proceed to S420.

Subsequently, if it is determined in S413 that the frame is not a legacy frame, that is, if the frame is a radio frame compliant with the IEEE 802.11 EHT (GEN7) or subsequent standard, the communication device executes the processing illustrated in S415 and the subsequent steps.

On the other hand, in S415, the communication device analyzes the U-SIG included in the preamble of the radio frame and determines whether the version indicates "0". Specifically, the communication device determines whether "0" is set as the value set in a field (PHY Version Identifier field described below) indicating the type of the standard included in the U-SIG. If "0" is set, the process proceeds to S416. If "0" is not set, the process proceeds to S417. "0" means the PHY of EHT (GEN7), and the determination processing of S415 can be a determination of whether the version of the radio frame (the version of the preamble) is EHT (GEN7).

In S416, the communication device determines that the subsequent preamble and data are compliant with EHT (GEN7), and analyzes the subsequent preamble and data. The data (MSDU) obtained as a result of the analysis of the frame is notified to the upper layer such as the data link layer or the network layer, and is appropriately processed by the upper layer. When the various processes based on the received radio frame are completed, the communication device causes the process to proceed to S420.

On the other hand, in S417, the communication device determines whether the version obtained by the analysis of S415 indicates "1". Specifically, the communication device determines whether "1" is set as the value set in a field (PHY Version Identifier field described below) indicating the type of the standard included in the U-SIG. If "1" is set, the process proceeds to S418. If "1" is not set, the process proceeds to S419. In the present embodiment, "1" means the PHY of HR (GEN8), and the determination processing of S418 can be a determination of whether the version of the radio frame (the version of the preamble) is compliant with the HR (GEN8) standard.

In S418, the communication device determines that the subsequent preamble and data are compliant with HR (GEN8), and analyzes the subsequent preamble and data. The data (MSDU including a MAC frame) obtained as a result of the analysis of the frame is notified to the upper layer such as the data link layer or the network layer, and is appropriately processed by the upper layer. When the various processes based on the received radio frame are completed, the communication device causes the process to proceed to S420.

On the other hand, in S419, the communication device stops interpreting the received radio frame, and discards the radio frame. As a result, the communication device can be prevented from unnecessarily continuing to read a radio frame for an unsupported standard, and the waste of the power consumption of the communication device can be prevented.

In the drawings, due to space limitations, a case is omitted in which the communication device complies with a successor standard to IEEE 802.11 HR (GEN8) (e.g., GEN9 in the following generation). When the communication device complies with GEN9, the communication device can be configured to perform analysis processing and data interpretation processing even upon receiving a PPDU supporting the successor standard and storing the version information (e.g., "2") corresponding to the successor standard. That is, it is desirable that the communication device be configured to perform a process of terminating the reading of the radio frame upon receiving a PPDU of a newer version than the version supported by the communication device. When the reading is terminated, the communication device causes the process to proceed to S420.

As a result of this processing, the communication device can terminate the reading (decoding processing) of the radio frame generated in accordance with a standard not supported by the communication device at an early stage, and can suppress the power consumption related to the reading of the radio frame.

In S420, the communication device determines whether to disable the wireless function. If the wireless function is determined to be disabled, the communication device terminates the transmission and reception control of a series of radio frames. If the wireless function is not determined to be disabled, the process proceeds to S401, and the communication device performs frame transmission and frame reception processing. Specifically, the communication device determines to disable the wireless function when receiving a user operation to turn off the power of the communication device via the UI control unit 304. The user operation to turn off the power may be a user operation on a hardware switch or a user operation on a display item for shutdown displayed on a shutdown screen (not illustrated) displayed on the output unit.

Subsequently, an example of a frame transmitted and received in the process of Fig. 4. For example, the AP generates and transmits a radio frame that includes a Beacon frame including information indicating the standard with which the AP complies. Then, the STA generates and transmits a radio frame that includes a Probe Request frame based on the Beacon frame. Then, the AP determines whether the Probe Request frame is a legacy frame and, if the Probe Request frame is not a legacy frame, whether the Probe Request frame is generated in accordance with the standard supported by the AP, based on the preamble of the radio frame. If the Probe Request frame is a legacy frame or a frame generated in accordance with the standard supported by the AP, the AP performs analysis at the MAC layer, which is an upper layer. By the analysis at the MAC layer, the AP can recognize that the frame is a Probe Request frame, and transmit the Probe Response frame. On the other hand, if it is determined based on the determination of the preamble that the frame is a radio frame conforming to a successor standard not supported by the AP, the AP discards the frame. Since the AP discards the frame without performing analysis at the MAC layer, the AP does not recognize that the frame is a Probe Request frame. Thus, the AP does not transmit the Probe Response frame.

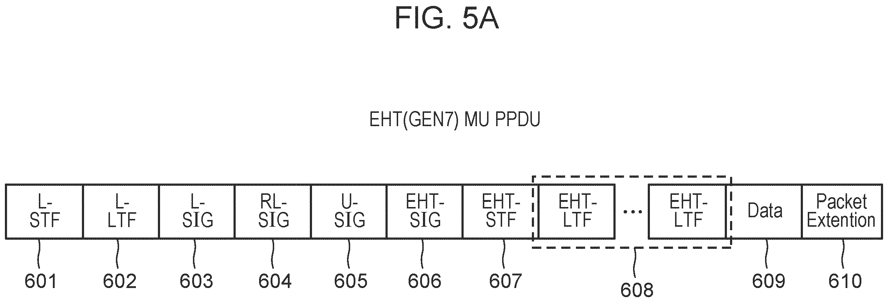

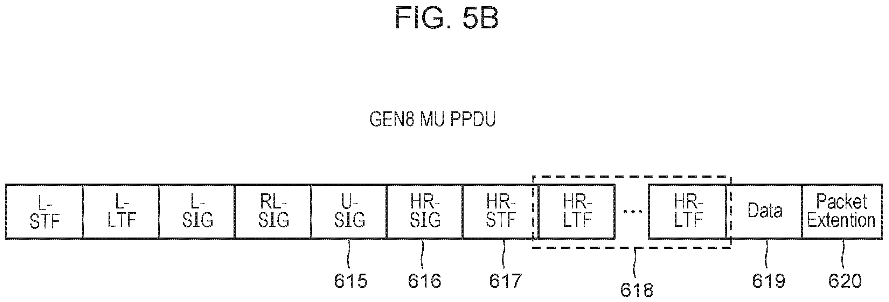

Subsequently, a description will be given with reference to an example configuration of a radio frame compliant with IEEE 802.11 EHT (GEN7) and HR (GEN8). Fig. 5A illustrates an example of an EHT MU (Multi User) PPDU for multi-user communication, and Fig. 5B illustrates an example of an HR (GEN8) MU (Multi User) PPDU for multi-user communication.

### (Description of EHT PPDU)

The EHT PPDU illustrated in Fig. 5A includes fields, namely, an STF (Short Training Field), an LTF (Long Training Field), and an SIG (Signal Field). As illustrated in Fig. 5A, the header portion of the PPDU includes an L (Legacy)-STF 601, an L-LTF 602, and an L-SIG 603 to ensure backward compatibility with the IEEE 802.11a/b/g/n/ax standard. The L-LTF is located immediately after the L-STF, and the L-SIG is located immediately after the L-LTF. The L-SIG is immediately followed by an RL-SIG (Repeated L-SIG, RL-SIG). In the RL-SIG field, the content of the L-SIG is transmitted repeatedly. The RL-SIG allows a receiver to recognize that the PPDU is compliant with the IEEE 802.11ax standard and the subsequent standards.

The L-STF is used for detection of a PHY frame signal, automatic gain control (AGC), timing detection, and the like. The L-LTF is used for highly precise synchronization of frequency and time, acquisition of propagation channel information (CSI: channnel state information), and the like. The L-SIG is used to transmit control information including information on a data transmission rate and a PHY frame length. A legacy device conforming to the IEEE 802.11a/b/g/n/ax standard or a device conforming to the EHT (GEN7) standard and the subsequent standards can decode the various legacy fields described above.

The PPDU further includes a U-SIG 605 (Universal Signal Field) located immediately after the RL-SIG. The U-SIG is a field for transmitting control information of each standard, which is scheduled to be commonly used in the IEEE 802.11 EHT (GEN7) and the subsequent standards. The U-SIG is immediately followed by an EHT-SIG. The EHT-SIG includes control information that is not included in the U-SIG, and control information to be notified to each user in multi-user transmission. The EHT-SIG 606 is modulated with an MCS specified in an EHT-SIG MCS field in the U-SIG.

The EHT-SIG 606 is followed by an EHT-STF 606, which is an STF for EHT, and an EHT-LTF 607, which is an LTF for EHT. The EHT-LTF is information used for MIMO estimation, beamforming estimation, or the like. A plurality of EHT-LTFs may be placed based on the number of MIMO antennas and the necessity of beamforming. A maximum of eight EHT-LTFs may be placed.

In the EHT MU PPDU described with reference to Fig. 5A, these control fields are followed by a data field 609 and a Packet Extention field 610. The fields from the L-STF to the EHT-LTF of the PPDU are referred to as a PHY preamble.

Subsequently, the U-SIG 605 included in the EHT MU PPDU described with reference to Fig. 5A will be described with reference to Tables 1 and 2.

The U-SIG is composed of two symbols (U-SIG1 and U-SIG2), and each symbol stores 25-bit information. Table 1 shows the format of the U-SIG1, and Table 2 shows the format of the U-SIG2.

In the present embodiment, it is assumed that the preambles of a PPDU of EHT (GEN7), a PPDU of HR (GEN8) as the successor standard thereto, and a PPDU of GEN9 as the successor standard thereto include the U-SIG1 and the U-SIG2, which are used in common. It is also assumed that the first 3 bits of the U-SIG1 of each frame (PPDU) commonly includes a subfield that stores information for differentiating between the versions (also called PHY Clauses) of radio frames. On the other hand, it is assumed that B4 to B25 of the U-SIG1 and B0 to B15 of the U-SIG2 include subfields that store control information customized for the respective standards.

**[Table 1]**

| Table 1 U-SIG1 field of an EHT MU PPDU (GEN7 MU PPDU) | | | | |
|---|---|---|---|---|
| U-SIG | Bit Position | Subfield | Number of Bits | Description |
| | B0-B2 | PHY Version Identifier | 3 | Information that differentiates between PHY Clauses. |
| | | | | Set to 0 for EHT (GEN7). |
| | B3-B5 | Bandwidth | 3 | Set to 0 for 20 MHz, set to 1 for 40 MHz, set to 2 for 80 MHz, set to 3 for 160 MHz, set to 4 for 320 MHz-1, and set to 5 for 320 Mhz-2. |
| | | | | A value of 6 or 7 means "reserved". |
| | B6 | UL/DL | 1 | Information indicating whether the PPDU is sent UL or DL. |
| | B7-B12 | BSS Color | 6 | 6 bits that identify the BSS. |
| U-SIG1 | B13-B19 | TXOP | 7 | Transmission Opportunity |
| | | | | Set to 127 if TXOP_DURATION of TXVECTOR is UNSPECIFIED and duration information is not present. |
| | | | | Set to a value less than 127 for NAV setting. At this time, if TXOP _DURATION of TXVECTOR is less than 512, set to a value twice FLOOR of TXOP_DURATION/8 (round down). Otherwise, set to a value obtained by adding 1 to twice FLOOR of (TXOP_DURATION - 512)/128. |
| | B20-B24 | Disregard | 5 | All are set to 1 and identified as Disregard. |
| | B25 | Validate | 1 | Reserved |

**[Table 2]**

| Table 2 U-SIG2 field of an EHT MU PPDU (GEN7 MU PPDU) | | | | |
|---|---|---|---|---|
| U-SIG | Bit Position | Subfield | Number of Bits | Description |
| | B0-B1 | PPDU Type And Compression Mode | 3 | If the UL/DL field is set to 0: |
| | | | | Set to 0 for DL OFDMA transmission, set to 1 for single-user transmission or EHT sounding NDP transmission, set to 2 for non-OFDMA DL MU-MIMO transmission, and 3 is a reserved value. |
| | | | | If the UL/DL field is set to 1: |
| | | | | Set to 1 for single-user transmission or EHT sounding NDP transmission, and 2 and 3 are reserved values. |
| | | | | Note: 0 is a value indicating a TB PPDU if the PPDU is a TB PPDU. |
| | B2 | Validate | 1 | Set to 1 and identified as a reserved value. |
| | B3-B7 | Punctured Channel Information | 5 | If the [PPDU Type And Compression Mode] field is set to 1 regardless of the value in the [UL/DL] field, or if the [PPDU Type And Compression Mode] field is set to 2 and the [UL/DL] field is 0: |
| | | | | Indicates Punctureing information of non-OFDMA transmission. |
| | | | | If the [PPDU Type And Compression Mode] field is set to 0 and the [UL/DL] field is 0: |
| | | | | (1) If the [Bandwidth] field is set to a value between 2 and 5, which indicates an 80 MHz, 160 MHz, or 320 MHz PPDU, B3 to B6 indicate a 4-bit bitmap that indicates which 20 MHz sub-channel is punctured in the 80 MHz frequency subblock where U-SIG processing is performed. |
| U-SIG2 | | | | The 4-bit bitmap is indexed by the 20 MHz sub-channels in ascending order, with B3 indicating the lowest frequency 20 MHz sub-channel. |
| | | | | For each of B3 to B6, 0 indicates that the corresponding 20 MHz channel is punctured, and 1 indicates otherwise. The allowed punctured patterns (B3 to B6) are 1111 (no puncturing), 0111, 1011, 1101, 1110, 0011, 1100, and 1001 for an 80 MHz frequency subblock. (2) If the [Bandwidth] field is set to a value of 0 or 1, which indicates a 20 MHz or 40 MHz PPDU, B3 to B6 are set to 1. Other values are reserved values. |
| | | | | B7 is set to 1 and identified as Disregard. |
| | B8 | Validate | 1 | Reserved |
| | B9-B10 | EHT-SIG MCS | 2 | MCS used for modulating EHT-SIG. |
| | | | | Set to 0 for EHT-MCS0, set to 1 for EHT-MCS1, set to 3 for EHT-MCS3, and set to 3 for EHT-MCS15. |
| | B11-B15 | Number Of EHT-SIG Symbols | 5 | The number of EHT-SIG symbols. |
| | | | | Set to a value obtained by subtracting 1 from the number of EHT-SIG symbols. |
| | B16-B19 | CRC | 4 | CRC for the bits up to here of the U-SIG (26 bits of U-SIG1 and 16 bits corresponding to up to bit 15 of U-SIG2, namely, 42 bits in total) field. |
| | B20-B25 | Tail | 6 | Set to 0 to indicate termination to the convolutional decoder. |

When generating and transmitting a radio frame compliant with the IEEE 802.11 EHT (GEN7) standard based on the process described with reference to Fig. 4, the communication device stores 0 in the "PHY Version Identifier" subfield in Table 1. Specifically, the communication device stores 0 in the "PHY Version Identifier" subfield, which is an area (B0-B2) of the header (bit 0) to bit 2 of the U-SIG. The communication device further stores a value corresponding to a specific bandwidth less than or equal to 320 Mhz, that is, any value between 1 and 5, in the "Bandwidth" subfield of the 3-bit area (B3-B5) from bit 3 to bit 5 in Table 1. The value to be stored is determined based on the transmission bandwidth determined in S404. The communication device further stores the MCS for EHT, which is used for modulating the EHT-SIG and determined based on the communication conditions or the like, in the "EHT-SIG MCS" subfield of the U-SIG2. MCS is an abbreviation for Modulation Coding Scheme. Another communication device that has received the EHT PPDU generated and transmitted by the communication device identifies the coding/modulation scheme of the EHT-SIG, based on the MCS for EHT set in the "EHT-SIG MCS" subfield. Subsequently, the other communication device determines that the EHT-SIG has been modulated using the identified coding/modulation scheme, and attempts to demodulate the EHT-SIG.

Further, the communication device determines values to be stored in the other subfields, based on the communication conditions or the like, and stores the values in the other subfields of the U-SIG1/2 as appropriate. The U-SIG1 and the U-SIG2 of the EHT standard are assumed to be modulated by the BPSK constellation.

In the present embodiment, an MU PPDU is presented as an example of an EHT PPDU to be transmitted and received by the communication device. However, the EHT PPDU to be transmitted and received by the communication device is not limited thereto. For example, an EHT-TB (Trigger Based) PPDU transmitted from the STA in response to a trigger frame transmitted from the AP is also exchanged between the communication devices.

The EHT TB PPDU is different from the EHT MU PPDU in that the EHT-SIG is not included and the handling of the information stored in B3-15 of the U-SIG2 is different. In contrast, the information to be stored in B0-B19 of the **U-**SIG1 is similar to that of the EHT MU PPDU.

Accordingly, desirably, the STA that is to transmit an EHT TB PPDU transmits a PPDU in which "0" is stored as information indicating the version in B0-2 of the U-SIG1 and information corresponding to the transmission bandwidth is stored in B3-5, even when transmitting the EHT TB PPDU.

### (Description of HR (GEN8) PPDU)

Next, the configuration of a PPDU of IEEE 802.11 HR (GEN8), which is the successor standard to IEEE 802.11 EHT (GEN7), will be described with reference to Fig. 5B. The description of a configuration similar to that of the EHT PPDU described with reference to Fig. 5A will be omitted as appropriate.

The HR (GEN8) PPDU includes an L-STF, an L-LTF, an L-SIG, and an RL-SIG similar to those of the EHT PPDU. The HR (GEN8) PPDU also includes a U-SIG 615 (Universal Signal Field) located immediately after the RL-SIG. The U-SIG 615 is immediately followed by an HR-SIG 616. The HR-SIG 616 includes control information that is not included in the U-SIG, and control information to be notified to each user in multi-user transmission according to the HR (GEN8) standard. The HR-SIG 616 is modulated with an MCS specified in an HR-SIG MCS field in the U-SIG.

The HR-SIG 616 is followed by an HR-STF 617, which is an STF for HR (GEN8), and an HR-LTF 618, which is an LTF for HR (GEN8). The HR-LTF 617 is information used for MIMO estimation, beamforming estimation, or the like. A plurality of HR-LTFs may be placed based on the number of MIMO antennas and the necessity of beamforming.

In the HR (GEN8) MU PPDU, these control fields are followed by a data field 619 and a Packet Extention field 620. The fields from the L-STF to the HR-LTF of the PPDU are referred to as a PHY preamble.

Subsequently, the U-SIG 615 included in the HR (GEN8) MU PPDU described with reference to Fig. 5B will be described with reference to Table 3 and Table 4.

**[Table 3]**

| Table 3 U-SIG1 field of an HR MU PPDU (GEN8 MU PPDU) | | | | |
|---|---|---|---|---|
| U-SIG | Bit Position | Subfield | Number of Bits | Description |
| | B0-B2 | PHY Version Identifier | 3 | Information that differentiates between PHY Clauses. |
| | | | | Set to 0 for EHT (GEN7), and set to 1 for HR (GEN8). |
| | B3-B5 | Bandwidth | 3 | Set to 0 for 20 MHz, set to 1 for 40 MHz, set to 2 for 80 MHz, set to 3 for 160 MHz, set to 4 for 320 MHz-1, set to 5 for 320 Mhz-2, set to 6 for 480 Mhz. and set to 7 for 640 Mhz. |
| | B6 | UL/DL | 1 | Information indicating whether the PPDU is sent UL or DL. |
| | B7-B12 | BSS Color | 6 | 6 bits that identify the BSS. |
| U-SIG1 | B13-B19 | TXOP | 7 | Transmission Opportunity |
| | | | | Set to 127 if TXOP_DURATION of TXVECTOR is UNSPECIFIED and duration information is not present. |
| | | | | Set to a value less than 127 for NAV setting. At this time, if TXOP_DURATION of TXVECTOR is less than 512, set to a value twice FLOOR of TXOP_DURATION/8 (round down). Otherwise, set to a value obtained by adding 1 to twice FLOOR of (TXOP_DURATION - 512)/128. |
| | B20-B24 | Disregard | 5 | All are set to 1 and identified as Disregard. |
| | B25 | Validate | 1 | Reserved |

**[Table 4]**

| Table 4 U-SIG2 field of an HR MU PPDU (GEN8 MU PPDU) | | | | |
|---|---|---|---|---|
| U-SIG | Bit Position | Subfield | Number of Bits | Description |
| | B0-B1 | PPDU Type And Compression Mode | 3 | If the UL/DL field is set to 0: |
| | | | | Set to 0 for DL OFDMA transmission, set to 1 for single-user transmission or HR sounding NDP transmission, set to 2 for non-OFDMA DL MU-MIMO transmission, and 3 is a reserved value. |
| | | | | If the UL/DL field is set to 1: |
| | | | | Set to 1 for single-user transmission or HR sounding NDP transmission, and 2 and 3 are reserved values. |
| | | | | Note: 0 is a value indicating a TB PPDU if the PPDU is a TB PPDU. |
| | B2 | Validate | 1 | Set to 1 and identified as a reserved value. |
| | B3-B7 | Punctured Channel Information | 5 | If the [PPDU Type And Compression Mode] field is set to 1 regardless of the value in the [UL/DL] field, or if the [PPDU Type And Compression Mode] field is set to 2 and the [UL/DL] field is 0: |
| | | | | Indicates Punctureing information of non-OFDMA transmission. |
| | | | | If the [PPDU Type And Compression Mode] field is set to 0 and the [UL/DL] field is 0: |
| U-SIG2 | | | | (1) If the [Bandwidth] field is set to a value between 2 and 7, which indicates an 80 MHz, 160 MHz, 320 MHz, 480 Mhz, or 640 MHz PPDU, B3 to B6 indicate a 4-bit bitmap that indicates which 20 MHz sub-channel is punctured in the 80 MHz frequency subblock where U-SIG processing is performed. |
| | | | | The 4-bit bitmap is indexed by the 20 MHz sub-channels in ascending order, with B3 indicating the lowest frequency 20 MHz sub-channel. |
| | | | | For each of B3 to B6, 0 indicates that the corresponding 20 MHz channel is punctured, and 1 indicates otherwise. The allowed punctured patterns (B3 to B6) are 1111 (no puncturing), 0111, 1011, 1101, 1110, 0011, 1100, and 1001 for an 80 MHz frequency subblock. |
| | | | | (2) If the [Bandwidth] field is set to a value of 0 or 1, which indicates a 20 MHz or 40 MHz PPDU, B3 to B6 are set to 1. Other values are reserved values. |
| | | | | B7 is set to 1 and identified as Disregard. |
| | B8 | Validate | 1 | Reserved |
| | B9-B10 | HR-SIG MCS | 2 | MCS used for modulating HR-SIG |
| | B11-15 | Number Of HR-SIG Symbols | 5 | The number of HR-SIG symbols. |
| | | | | Set to a value obtained by subtracting 1 from the number of HR-SIG |
| | | | | symbols. |
| | B16-B19 | CRC | 4 | CRC for the bits up to here of the U-SIG (26 bits of U-SIG1 and 16 bits corresponding to up to bit 15 of U-SIG2, namely, 42 bits in total) field. |
| | B20-B25 | Tail | 6 | Set to 0 to indicate termination to the convolutional decoder. |

In the following, portions different from those of EHT (GEN7) are underlined. The differences are examples and are not limited thereto.

A "PHY Version Identifier" subfield, which is common to the EHT MU PPDU, is located in a 3-bit area from the beginning (bit 0) to bit 2 of the U-SIG1 of the HR (GEN8) MU

### PPDU.

When generating and transmitting a radio frame compliant with the IEEE 802.11 HR (GEN8) standard based on the process described with reference to Fig. 4, the communication device stores 1 in the "PHY Version Identifier" subfield in Table 3. The communication device further stores a value corresponding to a specific bandwidth less than or equal to 640 Mhz, that is, any value between 1 and 7, in the "Bandwidth" subfield in Table 3. The difference from the EHT (GEN7) standard is that "6" is associated with a width of 480 Mhz and "7" is associated with a width of 640 Mhz.

The value to be stored is determined based on the transmission bandwidth determined in S404. Accordingly, it is possible to appropriately notify, using the preamble, that a radio frame with a width of 480 Mhz or a width of 640 Mhz is exchanged with the communication partner.

In the U-SIG2 compliant with the HR (GEN8) standard, the B9-10 and B11-15 fields are replaced with different fields for HR (GEN8).

The communication device stores the MCS for HR (GEN8), which is used for modulating the HR-SIG and determined based on the communication conditions or the like, in the "HR-SIG MCS" subfield of the U-SIG2. Another communication device that has received the EHT PPDU generated by the communication device identifies the coding/modulation scheme of the HR-SIG, based on the MCS for HR (GEN8) set in the "HR-SIG MCS" subfield. Subsequently, the other communication device determines that the HR-SIG has been modulated using the identified coding/modulation scheme, and attempts to demodulate the HR-SIG.

The B11-B15 area is replaced with a subfield indicating the number of symbols of the HR-SIG. The communication device sets, in this area, a value obtained by subtracting 1 from the number of symbols of the HR-LTF 618 included in the HR (GEN8) MU PPDU.

Further, the communication device determines values to be stored in the other subfields, based on the communication conditions or the like, and stores the values in the other subfields of the U-SIG1/2 for HR (GEN8) as appropriate. Further, the communication device may modulate the U-SIG1 for HR (GEN8) by BPSK and modulate the U-SIG2 by QBPSK.

In the present embodiment, an HR (GEN8) MU PPDU is presented as an example of an HR (GEN8) PPDU to be transmitted and received by the communication device. However, the HR (GEN8) PPDU to be transmitted and received by the communication device is not limited thereto. For example, an HR (GEN8) TB (Trigger Based) PPDU transmitted from the STA in response to a trigger frame transmitted from the AP is also exchanged between the communication devices.

The STA that is to transmit an HR (GEN8) TB PPDU stores "1" as information indicating the version in B0-2 of the U-SIG1 of HR (GEN8), even when transmitting an HR (GEN8) TB PPDU. Further, it is desirable to transmit a PPDU in which information corresponding to the transmission bandwidth is stored in B3-5 of the U-SIG1 of HR (GEN8).

In the present embodiment, it is assumed that the Bandwidth subfield indicating the transmission bandwidth is located in B3-5 of the HR (GEN8) MU PPDU or the HR (GEN8) TB PPDU, but the present invention is not limited thereto. The Bandwidth subfield may be located at another position. Specifically, the 3-bit Bandwidth subfield can be located at any position of B4 to B25 of the U-SIG1 or B0 to B15 of the U-SIG2. The Bandwidth subfield may be extended to 4 bits or more in consideration of the definition of a frequency bandwidth having a larger size or the definition of a frequency bandwidth partially overlapping an adjacent frequency bandwidth.

### (Modifications)

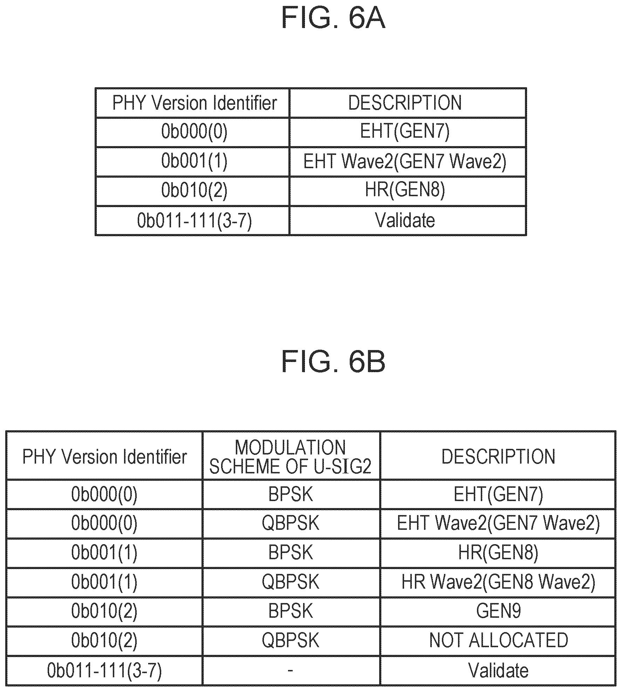

In the present embodiment, "1" is presented as an example of the information indicating the version of a radio frame for HR (GEN8). However, the present invention is not limited thereto. This will be described with reference to Fig. 6A and Fig. 6B. A Wave2 standard, an Extended standard, or the like, which is an improvement to EHT (GEN7), may be established between the HR (GEN8) standard and the EHT (GEN7) standard. In this case, radio frames may be extended in the standardization of EHT Wave2. In consideration of the possibility that radio frames will be extended in the standardization of EHT Wave2, as illustrated in Fig. 6A, "1" is associated with a radio frame compliant with the EHT Wave2 standard. Further, "2" is associated with a radio frame compliant with the HR (GEN8) standard. Such a modification can be made. In this case, the communication device set "2" in the "PHY Version Identifier" subfield in the processing of S406. Further, if 2 is set in the "PHY Version Identifier" subfield in the processing of S417, the communication device causes the process to proceed to S418.

As described above, desirably, when transmitting a radio frame for the HR (GEN8) standard, which is a successor standard aiming at a maximum transmission rate of 90 Gbps to more than 100 Gbps, the communication device is configured to transmit a specific value corresponding to the HR (GEN8) standard. In this case, a specific value greater than or equal to "1" and less than or equal to "7" is associated with the HR (GEN8) standard.

In addition, the version of a radio frame can be identified by a combination of controls such as whether to use the BPSK constellation or the QBPSK constellation for a modulation scheme of the U-SIG2. In this case, for example, as illustrated in Fig. 6B, the Wave1 standard can be identified when the U-SIG2 is modulated by BPSK, and the Wave2 standard can be identified when the U-SIG2 is modulated by QBPSK.

Note that the description of a standard name, such as IEEE 802.11 HR, and character string portions corresponding to the standard name in field names including the same character string as the standard name, such as HR-SIG, HR-STF, HR-LTF, and HR-SIG MCS, is not limited thereto. For example, HRL (High ReLiability) may be used. HRW (High Reliability Wireless) may be used. VHT (Very High Reliability) may be used. EHR (Extremely High Reliability) may be used. UHR (Ultra High Reliability) may be used. LL (Low Latency) may be used.

VLL (Very Low Latency) may be used. ELL (Extremely Low Latency) may be used. ULL (Ultra Low Latency) may be used. HRLL (High Reliable and Low Latency) may be used. URLL (Ultra-Reliable and Low Latency) may be used. URLLC (Ultra-Reliable and Low Latency Comminications) may be used.

For example, in the case of UHR, field names are also represented as field names composed of the character string corresponding to the standard name, such as UHR-SIG, UHR-STF, UHR-LTF, and UHR-SIG MCS, which simulate the standard. Other different names may be used.

### (Other Embodiments)

The present invention may also be implemented by processing in which a program for implementing one or more functions in the embodiment described above is supplied to a system or an apparatus via a network or a storage medium and one or more processors in a computer of the system or the apparatus read and execute the program. The present invention may also be implemented by circuitry (e.g., an ASIC) that implements the one or more functions.

The invention is not limited to the embodiment described above, and may be changed and modified in various ways without departing from the spirit and scope of the invention. Accordingly, to apprise the public of the scope of the invention, the following claims are made.

This application is based upon and claims the benefit of priority from Japanese Patent Application No. 2022-107398 filed July 1, 2022, the disclosure of which is incorporated herein in its entirety by reference.

## Claims

1. A communication device comprising
transmission means for transmitting a radio frame including a preamble for physical layers (PHY) and compliant with an IEEE 802.11 standard series, wherein the preamble includes at least a Legacy Signal Field (L-SIG) and a Universal Signal Field (U-SIG) communicated after the L-SIG in the radio frame,
the U-SIG includes a PHY Version Identifier Field relating to a PHY version with which the radio frame is compliant, and a Bandwidth Field,
the transmission means enables transmission of a radio frame in which 0 is specified in the PHY Version Identifier Field, and a radio frame in which a specific value greater than 0 is specified in the PHY Version Identifier Field, and
when transmitting a radio frame in which the specific value is stored in the PHY Version Identifier Field and a value greater than 6 is stored in the Bandwidth Field, the transmission means transmits the radio frame using a bandwidth greater than 320 MHz.

2. The communication device according to Claim 1, wherein when transmitting a radio frame in which 0 is stored in the PHY Version Identifier Field, the transmission means transmits the radio frame using a bandwidth less than or equal to 320 Mhz.

3. The communication device according to Claim 1 or 2,
wherein when a value stored in the PHY Version Identifier Field is 0, the Bandwidth Field of the U-SIG includes 3 bits, and when the value stored in the PHY Version Identifier Field is the specific value, the Bandwidth Field of the U-SIG includes 4 bits or more.

4. The communication device according to any one of Claims 1 to 3, wherein a radio frame in which 0 is stored in the PHY Version Identifier Field is a radio frame compliant with an IEEE 802.11be standard.

5. The communication device according to any one of Claims 1 to 4, wherein the PHY Version Identifier Field is located in bit 0 to bit 2 of the U-SIG, the bit 0 being a header of the U-SIG, and the Bandwidth Field is located in bit 3 to a specific bit of the U-SIG.

6. A communication method executed by a communication device, comprising
a transmission step of transmitting a radio frame including a preamble for physical layers (PHY) and compliant with an IEEE 802.11 standard series, wherein
the preamble includes at least a Legacy Signal Field (L-SIG) and a Universal Signal Field (U-SIG) communicated after the L-SIG in the radio frame,
the U-SIG includes a PHY Version Identifier Field relating to a PHY version with which the radio frame is compliant, and a Bandwidth Field,
the transmission step enables transmission of a radio frame in which 0 is specified in the PHY Version Identifier Field, and a radio frame in which 1 is specified in the PHY Version Identifier Field, and
when transmitting a radio frame in which 1 is stored in the PHY Version Identifier Field and a value greater than 6 is stored in the Bandwidth Field, the transmission step transmits the radio frame using a bandwidth greater than 320 MHz.

7. A program for causing a computer to function as the communication device according to any one of Claims 1 to 4.
